# EUROPEAN PATENT SPECIFICATION

(11) **EP 0 744 263 B1**
(45) Date of publication and mention of the grant of the patent: **12.07.2000**
(21) Application number: 96303734.6
(22) Date of filing: 24.05.1996
(51) Int. Cl.: B29C 35/02, B29C 70/54

(54) **Resin transfer moulding**
Transferspritzen von Kunstharz (R.T.M.)
Moulage par transfert de résine (R.T.M.)

(30) Priority: 24.05.1995 GB 9510496
(43) Date of publication of application: 27.11.1996
(73) Proprietor: FORD MOTOR COMPANY LIMITED, Brentwood Essex (GB); FORD FRANCE S. A., 92506 Rueil-Malmaison Cédex (FR); Ford-Werke Aktiengesellschaft, 50735 Köln (DE); Ford Motor Company, Dearborn, MI 48126 (US)
(72) Inventor: Middleton, Victor, Risley, Derbyshire DE7 3ST (GB); Harrison, Alan Robert, Benfleet, Essex SS7 4NS (GB); Kendall, Kenneth Neil, Ford Motor Company,, Dearborn, Michigan (US)
(74) Representative: Messulam, Alec Moses

(56) References cited:
- EP-A- 0 421 799
- EP-A- 0 542 508
- US-A- 4 344 142
- US-A- 5 345 397

## Description

This invention relates to resin transfer moulding, and in particular to moulding apparatus and to a method of operating the apparatus.

Resin transfer moulding involves the placing of preformed reinforcement (typically glass fibre mat) in a mould, closing the mould and then introducing liquid, catalysed resin which flows through the mould, wetting out the reinforcement, and then sets. When the resin has set, the mould can be opened, the moulded component can be removed and a new cycle can be started.

For economical operation, it is desirable to reduce the cycle time as far as possible, without compromising the product quality.

Curing of the resin is highly temperature dependent. For example one typical polyester resin system consists of a base resin sold under the designation CV 6345 by Cray Valley Total Chemie and 2% of the catalyst Perkadox 16 sold by AKZO. At room temperature, this system would cure in about 4 hours, at 60°C it would cure in about 6 minutes. In using this system, it would be the intention to raise the mould temperature to 60°C to cure the resin, ie by about 40°C from a typical ambient temperature of 20°C. In another example, the same base resin is used with 1% of TBPEH (sold by AKZO) as catalyst. At room temperature this system would remain liquid for about 10 hours before curing, whereas at 70°C it would cure in about 16 minutes. Since the ambient temperature may vary between about 0°C and 30°C from day to day, and during each day, changes in ambient conditions can significantly affect the curing time of the resin and it is therefore necessary to ensure that corrections are made to the moulding conditions to compensate for changes in ambient conditions which would otherwise make the process inconsistent from one cycle to the next.

EP-A-421799 discloses resin transfer moulding equipment and method in accordance with the preambles of claims 1 and 7, where temperature sensors can be placed at various positions in the mould.

In US-A-5345397, a control system uses data gathered during curing processing to calculate repetitively the temperature of an autoclave required to establish and maintain a predetermined cure temperature.

According to the invention, there is provided apparatus for resin transfer moulding wherein a mould is provided with at least one sensor, wherein the or each sensor is adapted to detect the occurrence and the magnitude of the peak of the exothermic reaction within the resin, and is connected to a processor unit, wherein the processor unit is connected to means for opening the mould and is programmed to calculate, for each mould cycle, a delay period which depends on the magnitude of the peak, and to initiate mould opening at the end of the delay period.

The cure or setting time of the resin in resin transfer moulding (RTM) is considerably influenced by many factors, for example by mould and resin temperatures (which themselves are strongly influenced by ambient conditions), by cavity volumes and by resin chemistry. It is however a characteristic of the resin setting process that an exothermic reaction takes place, and the occurrence of this reaction can be noted by monitoring either the pressure or the temperature of the resin in the mould. A sharp increase in either pressure or temperature corresponds to the exothermic reaction taking place.

The sensors may therefore be temperature or pressure sensors. Most commonly however, it will be temperature which is measured and the sensors will be temperature sensors.

Where the parameter being measured is temperature, the processor unit will include means for detecting peak temperature readings from the temperature sensors. The processor will include a processor stage for calculating a delay period between the occurrence of peak exotherm and the initiation of mould opening. If the peak exotherm is at a high temperature, as will occur at high ambient temperatures and high mould temperatures, the delay period will be relatively short. If it is at a low temperature, as will occur at low ambient temperatures and low mould temperatures, the delay period will be relatively long.

Temperature sensors for use in this apparatus are preferably thermocouples located in the mould cavity walls. However other temperature measuring sensors, such as thermistors, may alternatively be used.

Pressure sensors may be any suitable transducer or other type of sensor which is capable of being mounted in close proximity to the cavity. Temperature increases in the resin will result in thermal expansion of the resin and this can be detected by pressure sensors. Pressure sensors can thus provide signals indicating the occurrence of temperature changes in the cavity.

The invention also provides a method of operating a resin transfer moulding apparatus comprising the steps of sensing parameters within the mould cavity during each mould cycle, the method comprises the steps of monitoring the parameters sensed to determine the moment of occurrence and the magnitude of the peak of an exothermic reaction taking place in the mould, and opening the mould at a time after the peak of the exothermic reaction, which time is calculated for each cycle in dependence on the magnitude of the peak occurring in that cycle.

The time between exotherm peak and mould opening will vary from cycle to cycle and will for example depend strongly on ambient conditions in the factory where the mould is sited, and on the mould temperature itself. At the beginning of the day, the mould will be relatively cold and the cycle time will be relatively long. During the day, as the ambient temperature and the mould temperature become higher, the cycle time will become shorter. For example, on hot days the product will cure more rapidly and the mould will be capable of being opened after a relatively short time whereas on cold days the product will cure slowly and it may be a relatively long time before sufficient cure has taken place to allow opening of the tool. By use of this method and apparatus, the mould opening time will be correctly determined whatever the ambient and in-mould conditions so that on the one hand the cycle time is kept as short as possible (thus maximising productivity) and on the other hand the product is not left in the mould too long (which has a damaging effect on product quality).

Preferred embodiments of the invention are defined in the dependent claims 2-6 and 8.

The invention will now be further described, by way of example, with reference to the accompanying drawings, in which:
Figure 1 is a schematic diagram of apparatus in accordance with the invention;
Figure 2 is a plot of time against temperature, showing the occurrence of the exothermic reaction; and
Figure 3 is a plot of time against temperature, showing the occurrence of the exothermic reactions in two different cycles.

A personal computer (PC) 10, local to a programmable logic controller (PLC) 12 is connected to a mould 14 with upper and lower mould halves 14a and 14b and a mould cavity 16.

Liquid resin is introduced to the cavity 16 through an inlet 18. A number of thermocouples 20 are provided in the cavity walls, at positions which will be determined in accordance with the shape of the cavity and the shape of the reinforcement preform which will be placed in the cavity before moulding.

Although this description is based on the measurement of temperature in the mould cavity, it is to be understood that pressure in the mould cavity could equally be measured, and the skilled man will understand from this description how pressure measurement could take place.

A program running on the PC not only provides the PLC with signals to indicate peak exotherm and demould at the appropriate times, but also logs thermal data from the thermocouples 20 to a log file on a remote computer, along with times at which the data was logged and/or when specific events occurred. This file can be interrogated later to provide better understanding of the moulding process and for quality assurance procedures.

Once started, the software waits until the operator presses the 'cycle start' on a control panel 22. The system then autocycles continuously, or until an error code is received from the PLC control panel.

Upon receiving the instruction from the PLC, the PC 10 informs the PLC 12 that it is ready to start logging data. When it is ready, the PLC sets a signal to inform the PC to start monitoring data. The PC writes the thermal data to the log file, whilst also graphically displaying selected thermocouple data on the display 24. Resin is injected into the cavity through the inlet 18 under the instruction of the PLC.

Following supply of the predetermined resin volume, the PLC sends a signal to the PC indicating that the injection phase is complete. The PC commences its routines for detection of the exotherm.

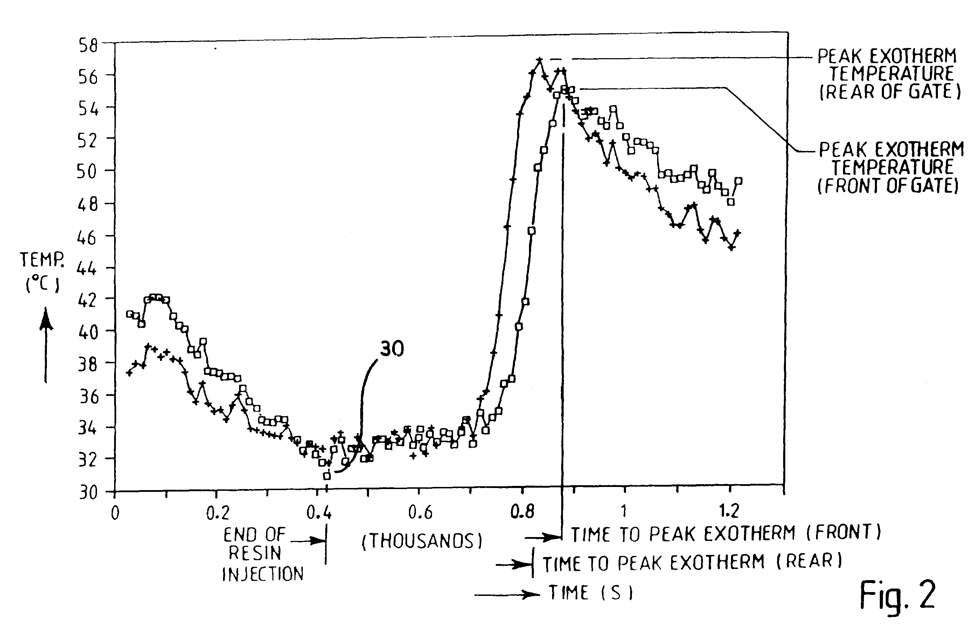

Figure 2 shows temperature profiles taken from two different thermocouples during the course of one moulding cycle. Initially, during resin injection, there is a fall in temperature as the incoming resin cools the heated mould. Once resin injection ends (point 30 in Figure 2), the heating system in the mould begins to raise the resin temperature, and at a certain point, the catalyst/resin mixture begins to cure rapidly in an exothermic reaction. The heat evolved is readily detected by the thermocouples, and corresponding signals are sent to the PC. The PC detects the exotherm peak temperature at all the thermocouples before sending a 'peak exotherm' signal to the PLC.

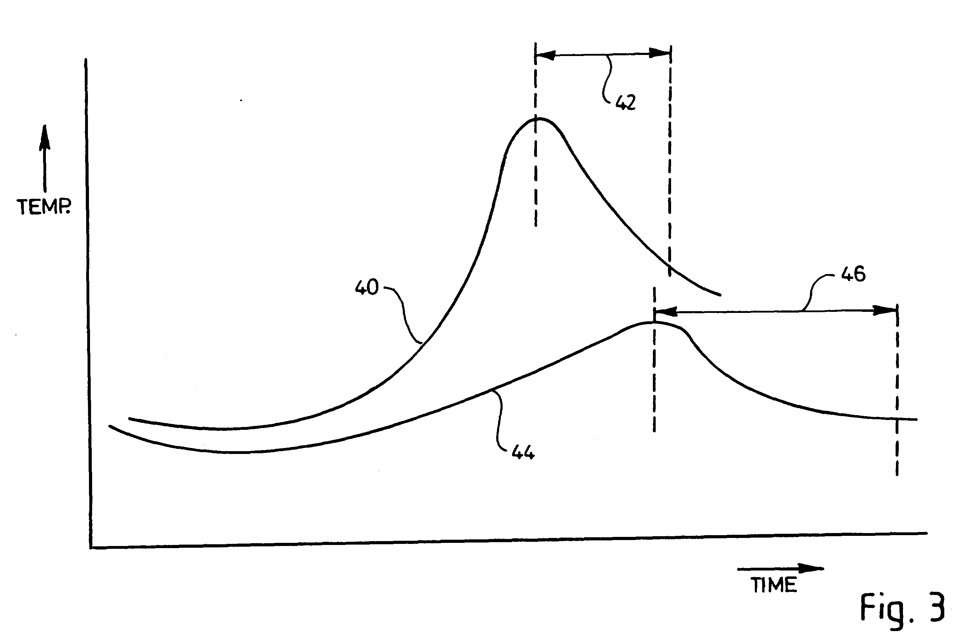

Figure 3 shows temperature profiles taken from the same thermocouple in two different moulding cycles which took place under significantly different ambient conditions. The cycle represented by the profile 40 had an early, high temperature exotherm peak, and a relatively short hardening off time 42. The cycle represented by the profile 44 had a later, low temperature exotherm peak, and a relatively long hardening off time 46.

When the peak exotherm has been detected and the resin temperature starts to fall, the PC indicates this to the PLC and the PLC sounds an alarm to indicate to the operators that the tool will be opened shortly. The software continues to monitor the cavity temperature, whilst maintaining the tool closed for a determined time period. This period provides time to enable the component to 'harden off' prior to being handled during its demoulding. This hardening off time is a variable which will be separately determined for each cycle. The relationship between magnitude of the exotherm peak and hardening off time (the time between exotherm peak and demoulding) can be determined empirically. After this hardening off time, the PC indicates to the PLC that the tool is ready to be opened. The PC then stops temperature recording and instructs the mould opening gear to open the mould. Although temperature logging ceases, the PC continues to monitor signals from the PLC.

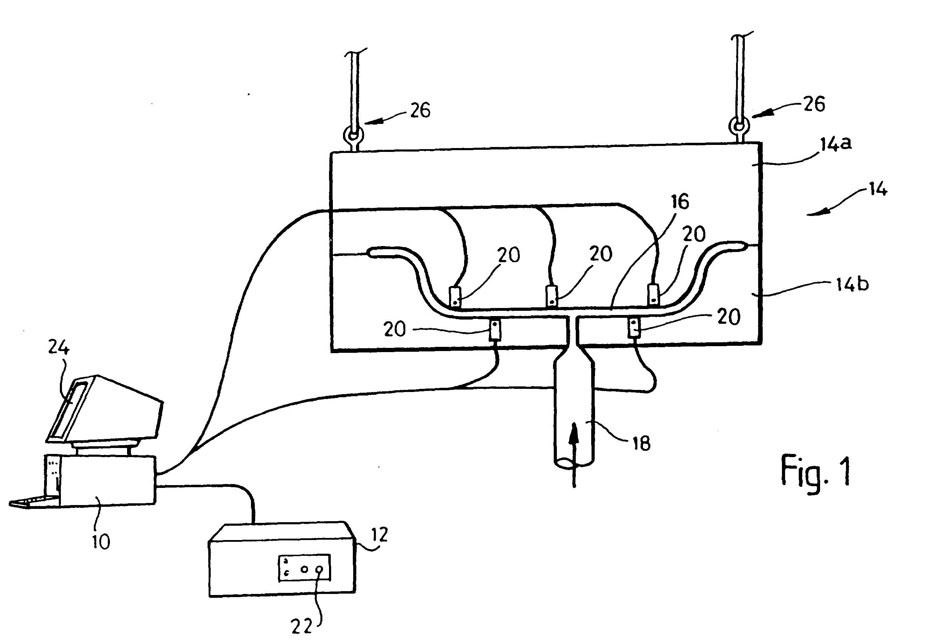

The mould itself is provided with lifting means, indicated schematically in Figure 1 by ropes and eyes, and this lifting means can be caused to operate automatically on receipt of an appropriate signal from the PC 10.

At the end of the cycle, the PLC indicates completion to the PC. The PC increments the moulding record number, and the next cycle begins.

The system described is able to produce significantly shorter cycle times because of the accuracy with which the occurrence of exotherm is known compared to the previously known technique of estimating the progress of resin setting from the occurrence of gelling at the mould vent locations. Furthermore, because demoulding will always occur at the same time after exotherm, problems with demoulding the components are avoided. If the component is allowed to cool too far in the mould, the component can shrink and bind onto the male half of the mould, making demoulding difficult.

## Claims

1. Apparatus for resin transfer moulding wherein a mould (14) is provided with at least one sensor (20), characterised in that the or each sensor (20) is adapted to detect the occurrence and the magnitude of the peak of the exothermic reaction within the resin, and is connected to a processor unit (12), wherein the processor unit (12) is connected to means for opening the mould (14) and is programmed to calculate, for each mould cycle, a delay period (42,46) which depends on the magnitude of the peak, and to initiate mould opening at the end of the delay period (42,46) .

2. Apparatus as claimed in Claim 1, wherein there are a plurality of temperature sensors (20).

3. Apparatus as claimed in Claim 1, wherein some of the sensors (20) are temperature sensors and some are pressure sensors.

4. Apparatus as claimed in Claim 1, wherein the sensors (20) are pressure sensors.

5. Apparatus as claimed in Claim 2 or Claim 3, wherein the temperature sensors are thermocouples (20) located in the mould cavity walls.

6. Apparatus as claimed in Claim 4, wherein the pressure sensors (20) are transducers capable of being mounted in close proximity to the cavity and providing signals indicating the occurrence of temperature changes in the cavity.

7. A method of operating a resin transfer moulding apparatus comprising the steps of sensing parameters within the mould cavity during each mould cycle, the method being characterised in that it comprises the steps of monitoring the parameters sensed to determine the moment of occurrence and the magnitude of the peak of an exothermic reaction taking place in the mould (14), and opening the mould at a time (42,46) after the peak of the exothermic reaction, which time is calculated for each cycle in dependence on the magnitude of the peak occurring in that cycle.

8. A method as claimed in Claim 7, wherein the parameters sensed are temperature parameters.

## Patentansprüche

1. Gerät für Kunstharz-Preßspritzgießen, in dem eine Form (14) mit wenigstens einem Meßgeber (20) versehen ist, dadurch gekennzeichnet, daß der oder die Geber (20) dazu ausgelegt ist/sind, das Auftreten sowie die Größe einer Spitze einer exothermen Reaktion in dem Harz zu erfassen, und mit einer Prozessoreinheit (12) verbunden ist/sind, worin die Prozessoreinheit (12) mit Mitteln für die Öffnung der Form (14) verbunden und so programmiert ist, daß sie für jeden Zyklus einen Wartezeitraum (42, 46) berechnet, der von der Größe des Spitzenwertes abhängig ist, sowie zum Auslösen der Öffnung am Ende des Wartezeitraumes (42, 46).

2. Gerät nach Anspruch 1, worin mehrere Temperaturmeßgeber (20) vorgesehen sind.

3. Gerät nach Anspruch 1, worin einige der Meßgeber (20) Temperaturmeßgeber sind, und andere Druckmeßgeber sind.

4. Gerät nach Anspruch 1, worin die Meßgeber (20) Druckmeßgeber sind.

5. Gerät nach Anspruch 2 oder Anspruch 3, worin die Temperaturmeßgeber an den Wänden des Formhohlraumes angeordnete Thermoelemente (20) sind.

6. Gerät nach Anspruch 4, worin die Druckmeßgeber (20) Meßgrößenumformer sind, welche in unmittelbarer Nähe des Hohlraumes eingebaut werden können und Signale liefern können, welche das Auftreten von Temperaturänderungen im Hohlraum anzeigen.

7. Verfahren zum Betreiben eines Kunstharz-Preßspritzgußgerätes, den Schritt der Erfassung von Parametern im Formhohlraum für jeden Gießzyklus aufweisend,
welches Verfahren dadurch gekennzeichnet ist, daß es die Schritte der Überwachung der gemessenen Parameter beinhaltet, zwecks Erfassung des Zeitpunktes des Auftretens sowie der Größe der Spitze einer in der Form (14) stattfindenden exothermen Reaktion, und denjenigen der Öffnung der Form nach Ablauf eines Zeitraumes (42, 46) nach der Spitze der exothermen Reaktion, welcher Zeitraum für jeden Zyklus in Abhängigkeit von der Größe der in diesem Zyklus auftretenden Spitze berechnet wird.

8. Verfahren nach Anspruch 7, in welchem die gemessenen Parameter Temperaturparameter sind.

## Revendications

1. Appareil destiné au moulage par transfert de résine dans lequel un moule (14) est muni d'au moins un capteur (20), caractérisé en ce que le ou chaque capteur (20) est conçu pour détecter l'apparition et l'amplitude du pic de la réaction exothermique à l'intérieur de la résine, et est relié à une unité de processeur (12), dans lequel l'unité de processeur (12) est reliée à un moyen destiné à ouvrir le moule (14) et est programmée pour calculer, pour chaque cycle de moulage, une période de retard (42, 46) qui dépend de l'amplitude du pic, et pour déclencher l'ouverture du moule à la fin de la période de retard (42, 46).

2. Appareil selon la revendication 1, dans lequel se trouve une pluralité de capteurs de température (20).

3. Appareil selon la revendication 1, dans lequel certains des capteurs (20) sont des capteurs de température et certains sont des capteurs de pression.

4. Appareil selon la revendication 1, dans lequel les capteurs (20) sont des capteurs de pression.

5. Appareil selon la revendication 2 ou la revendication 3, dans lequel les capteurs de température sont des thermocouples (20) situés dans les parois de la cavité du moule.

6. Appareil selon la revendication 4, dans lequel les capteurs de pression (20) sont des transducteurs pouvant être montés à proximité immédiate de la cavité et fournissant des signaux indiquant l'apparition de variations de température dans la cavité.

7. Procédé de mise en oeuvre d'un appareil de moulage par transfert de résine comprenant les étapes consistant à détecter des paramètres à l'intérieur de la cavité du moule pendant chaque cycle de moulage, le procédé étant caractérisé en ce qu'il comprend les étapes consistant à surveiller les paramètres détectés afin de déterminer l'instant d'apparition et l'amplitude du pic d'une réaction exothermique qui a lieu dans le moule (14), et à ouvrir le moule à un instant (42, 46) après le pic de la réaction exothermique, lequel instant est calculé pour chaque cycle suivant l'amplitude du pic apparaissant dans ce cycle.

8. Procédé selon la revendication 7, dans lequel -les paramètres détectés sont des paramètres de température.
